# EUROPEAN PATENT APPLICATION

(11) **EP 2 865 479 A1**
(43) Date of publication of application: **29.04.2015**
(21) Application number: 13189695.3
(22) Date of filing: 22.10.2013
(51) Int. Cl.: B23K 26/00, B23K 26/08, C23C 4/00, C23C 4/18, B23K 26/34

(54) **Method and system for generating a component using thermal spraying and laser fusing**

(71) Applicant: Siemens Aktiengesellschaft, 80333 München (DE)
(72) Inventor: Arjakine, Nikolai, 10555 Berlin (DE); Burbaum, Bernd, 14612 Falkensee (DE); Harms, Robert, 10437 Berlin (DE); Münzer, Jan, 10439 Berlin (DE); Ott, Michael, 45470 Mülheim an der Ruhr (DE); Piegert, Sebastian, 10777 Berlin (DE); Thomaidis, Dimitrios, 14197 Berlin (DE)

(57) **Abstract**

A system and method for generating a component by forming layer on a core by using thermal spraying and laser fusing techniques. In accordance with the method disclosed, one or more layers of a specific material are deposited by using a thermal spraying arrangement on one or more specific sections of the core. At next step of the method disclosed in the invention, the one or more layers are fused by using a laser beam arrangement to form one or more fused layers on the one or more specific sections of the core.

## Description

The present invention relates to a method and a system for generating a component and more particularly, to a method and a system for generating a component using thermal spraying and laser fusing.

In modern era, an additive manufacturing is a process of making a three dimensional component of virtually any shape from a digital mode. The three dimensional component can be a part of a huge machine or could be a complete mechanical component to be used in a system. The three dimensional component can be, but not limited to, a bearing, a solid metallic ring, a screw, a nozzle, a turbine blade or a shaft. The additive manufacturing also includes laying down successive layers of various materials in different shapes on the three dimensional component. There is a number of processes available for additive manufacturing. The available processes for additive manufacturing are different from each other on the basis of the ways of forming layers to manufacture components and material used for manufacturing the components. The available processes for additive manufacturing are, but not limited to, selective laser melting (SLM) or direct metal laser sintering (DMLS), selective laser sintering (SLS) and fused deposition modelling (FDM).

The selective laser melting (SLM), referred to as laser melting hereafter, is a process for additive manufacturing that uses 3D CAD data as a digital information source and energy in the form of a high powered laser beam to create three-dimensional components or metal parts by fusing fine metallic powders together. The laser melting is also used for forming layers on the three-dimensional components or metal parts. In general, the process of layer formation on the three-dimensional components using laser melting includes a first step of depositing a thin layer of powder on the component. The powder deposited on the component is of a material whose layer is needed to be formed on the component. After depositing the powder, a focused laser beam scans the deposited powder for fusing the powder particles together and to form a solidified layer on the component. The process of fusing the deposited powder or any mixture of particles using laser is also known as laser fusing.

In addition to this, the laser melting process may have a lot of variations including mixture of the powder deposited, focusing the laser beam, etc. The laser melting is advantageous because of its selective nature, in other words, while forming a layer on the component the manufacturer can select on which part of the component surface the layer is needed to be formed. The types of applications most suited to the laser melting are complex geometries and structures with thin walls and hidden voids or channels.

Another well known method for applying coatings of different materials on the components is thermal spraying. In general, the thermal spraying techniques are coating processes in which melted or heated materials are sprayed on a surface of a component. Thermal spraying can provide thick coatings over a large area at high deposition rate as compared to other coating processes such as electroplating, physical and chemical vapour deposition. Coating materials commonly used for thermal spraying include, but not limited to, metals, alloys, ceramics, plastics and composites. In the thermal spraying process, the material which needs to be coated is heated to a molten or semi-molten state and accelerated towards the component surface in the form of micrometer-size particles.

The above mentioned two techniques, i.e. laser melting and thermal spraying, are well known in the state of the art. There are numerous applications dependent variants of the two techniques, i.e. laser melting and thermal spraying is also known to a person ordinarily skilled in the art. In addition to this, there are lots of advantages mentioned in the state of the art, associated with the use of two techniques, i.e. laser melting and thermal spraying for forming layers on the component. Even though, one important disadvantage of using the laser melting process for forming layers on the surface of the components is that the density of the formed layer is less. The prime reason behind the formation of a less dense layer is that the powder deposited on the component surface during the laser melting process, as mentioned above, includes pores while depositing on the component surface. Due to these pores, the density of the layer formed using a focused laser beam in the laser melting process, failed to form a dense layer on the component surface. On the other hand, a major challenge associated with the thermal spraying techniques is to selectively form a layer on the component surface as it is difficult to select specific portions on the component surface to form a layer while spraying a heated material over the component surface.

In the light of the foregoing discussion, it is clearly evident that there is a strong need for an improved method and system for forming layer on a component surface which is capable of forming a dense layer over some selected portions of the component surface.

It is therefore an objective of the present invention to provide a method and system for selectively forming a layer on a component surface.

The objective is achieved by providing a method for forming a layer on a core according to claim 1, and a system for forming a layer on a core according to claim 6. Further embodiments of the present invention are addressed in the dependent claims.

In a first aspect of the present invention, a method for forming one or more fused layers on a core is disclosed. In accordance with the method of the present invention, initially, one or more layers of a specific material are deposited by using a thermal spraying arrangement on one or more specific sections of the core. At next step of the method disclosed in the invention, the one or more layers are fused by using a laser beam arrangement to form one or more fused layers on the one or more specific sections of the core.

In accordance with the first aspect of the present invention, the depositing and fusing the one or more layers also comprises a step of rotating the core along its axis.

Further, in accordance with the first aspect of the present invention, fusing the one or more layers further comprises a step of scanning the one or more layers by using a focused laser beam.

Furthermore, in accordance with the first aspect of the present invention, the method also comprises a step of placing the one or more specific sections of the core under the laser beam arrangement before fusing the one or more layers.

In a second aspect of the present invention, a system for forming one or more fused layers on a core is provided. The system comprises a thermal spraying arrangement for depositing one or more layers of a specific material on one or more specific sections of the core. In addition to this, the system comprises a laser beam arrangement (202) for fusing the one or more layers to form the one or more fused layers on the one or more specific sections of the core.

In accordance to the second aspect of the present invention, the system includes a movement controller for rotating and moving the core. The movement controller is connected to the core with the help of a connection arrangement.

Further, in accordance with the second aspect of the present invention, the laser beam arrangement comprising a focused laser beam for scanning the one or more layers.

Accordingly, the present invention provides a method and a system for forming a dense layer on a core which in turns used for generating a component.

The present invention is further described hereinafter with reference to illustrated embodiments shown in the accompanying drawings, in which:
- FIG 1: illustrates a perspective view of a thermal spraying system in accordance with an embodiment of the present invention,
- FIG 2: illustrates a perspective view of a laser fusing system in accordance with an embodiment of the present invention, and
- FIG 3: illustrates a flow chart for a method for generating a component in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

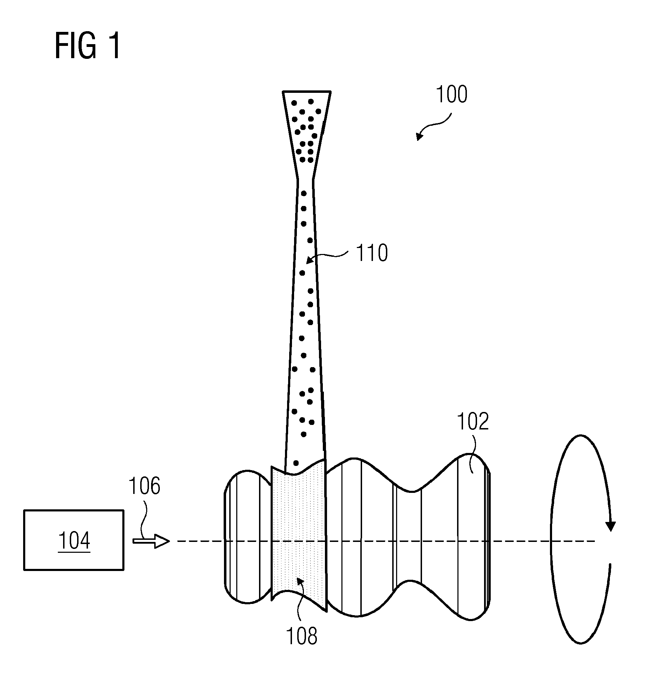

FIG 1 illustrates a perspective view of a thermal spraying system 100 in accordance with an embodiment of the present invention.

As shown in FIG 1, the thermal spraying system 100 includes a ceramic core 102 and a thermal spray arrangement 110. The thermal spraying system 100 also includes a movement controller 104 which controls the movement of the ceramic core 102 relative to the thermal spray arrangement 110 using a connection arrangement 106. In this embodiment of the invention, the ceramic core 102 is a mould of a component that needed to be manufactured of a specific material. The ceramic core 102 is placed on a work bench, not shown in FIG 1 and is controlled by the movement controller 104. The movement controller 104 is capable of rotating the ceramic core 102 on its own axis with a controlled velocity. The movement controller 104 is also capable of moving the ceramic core 102 in forward and/or reverse direction on the work bench i.e. along the axis of rotation. The movement controller 104 controls the movement and rotation of the ceramic core 102 with the help of the connection arrangement 106, as shown in FIG 1. The connection arrangement 106 can be, but not limited to, a mechanical connection or an electro-mechanical connection. A layer 108 of the specific material is formed on a section of the ceramic core 102 as shown in FIG 1. The specific material of the layer 108 can be, but not limited to, a metal, an alloy, plastic and/or any combination of it.

The layer 108 is deposited on the ceramic core 102 using the thermal spray arrangement 110 as shown in FIG 1. The thermal spray arrangement 110 is a conventional thermal spraying apparatus know in the state of the art. The objective of the thermal spray arrangement 110 is to deposit the layer 108 of the specific material on the specific section of the ceramic core 102 as shown in FIG 1. The process of depositing the specific material on the ceramic core 102 by the thermal spray arrangement 110 is carried out with the help of the movement controller 104 and the connection arrangement 106. To deposit the layer 108 on the ceramic core 102, the specific material in a molten or semi-molten state is accelerated towards or sprayed on the ceramic core 102 in the form of micrometer-size particles by the thermal spray arrangement 110. The movement controller 104 keeps on rotating the ceramic core 102, by using the connection arrangement 106, along its axis with a specific velocity during the spray of the micrometer-size particles of the specific material. The rotation of the ceramic core 102 helps to develop the layer 108 at each part of the specific section of the ceramic core 102 symmetrically, as shown in FIG 1, such that a homogeneous layer 108 is created.

In alternate embodiments of the present invention, the ceramic core 102 can be, but not limited to, a metal core, a plastic core and/or an alloy core.

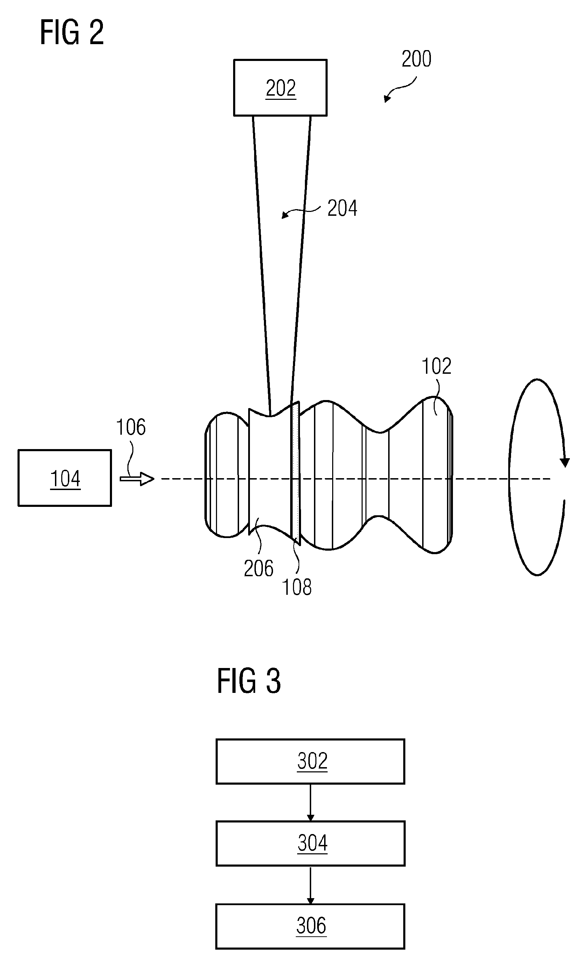

FIG 2 illustrates a perspective view of a laser fusing system 200 in accordance with an embodiment of the present invention.

The laser fusing system 200 shown in FIG 2 includes the ceramic core 102 and a laser beam arrangement 202. The laser fusing system 200 also includes the movement controller 104 which controls the movement of the ceramic core 102 using the connection arrangement 106. The functionality and other details of the ceramic core 102, the movement controller 104 and the connection arrangement 106 is same as described in conjunction with FIG 1. After the formation of the layer 108 as described in FIG 1, the movement controller 104 slides the ceramic core 102 over the work bench, not shown in figures, in such a way that the layer 108 is placed under a focus area of the laser beam arrangement 202, as shown in FIG 2. The movement controller 104 slides the ceramic core 102 with the help of the connection arrangement 106 as mentioned in FIG 1. Once the ceramic core 102 is positioned in such a way that the layer 108 can be focused by the laser beam arrangement 202, the laser beam arrangement 202 starts scanning the layer 108 with a focused laser beam 204, as depicted from FIG 2. The layer 108 of the specific material deposited on the ceramic core 102 by the thermal spraying arrangement 110 as described in FIG 1, is fused by the focused laser beam 204 of the laser beam arrangement 202. Due to the fusion process carried out by the focused laser beam 204 on the layer 108, a fused layer 206 of the specific material is formed over the layer 108 on the ceramic core 102, as shown in FIG 2.

In an alternate embodiment of the present invention, the fo-cused laser beam 204 also contains a small volume of smelt. Due to high speed cooling property and the small volume of smelt present in the focused laser beam 204, the solidification process of the layer 108 i.e. the formation of the fused layer 206 will initiate primarily through a germ formation that is initiated favourably from the edge of the small volume of smelt present in the focused laser beam 204.

In accordance with a preferred embodiment of the present invention, by using the thermal spray arrangement 110 for depositing the layer 108 as shown in FIG 1 followed by fusing the layer 108 by using the laser beam arrangement 202 as shown in FIG 2, it is possible to generate a grain structure over the ceramic core 102. The grain structure runs radial from surface of the ceramic core 102 towards the outside, so that all boundaries of the grain structure solidify in radial direction.

Referring now to FIG 3, a flow chart for a method for generating a component is illustrated in accordance with an embodiment of the present invention.

At step 302, the layer 108 of the specific material is deposited on the specific section of the ceramic core 102 by using the thermal spraying arrangement 110 as shown in FIG 1. The preferred and alternate methods for depositing the layer 108 on the ceramic core 102 are explained in preceding figures.

At step 304 of the flow chart shown in FIG 3 the ceramic core 102 is positioned under the laser beam arrangement 204 by the movement controller 104 with the help of the connection arrangement 106 as described in conjunction on FIG 1 and FIG 2. The preferred and alternate methods of placing the ceramic core 102 under the laser beam arrangement are also explained in preceding figures.

At a final step of the method flow chart shown in FIG 6, i.e. at step 306, the layer 108 is fused by the focused laser beam 204 in order to form the fused layer 206 on the specific portion of the ceramic core as shown in FIG 2. The preferred and alternate methods of forming the fused layer 206 on ceramic core 102 are also explained in preceding figures.

In the light of the foregoing description, the present invention provides a system and a method for generating components using thermal spraying and laser fusing.

In addition to this, the system and the method for generating components using thermal spraying followed by laser fusing disclosed in the present invention is also capable of forming a high density layer of a material due to reduction in pores during thermal spraying. As the high density layer provides higher thermal conductivity, the disclosed system and method in the invention become advantageous over the method and the system for generating components known in the state of the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method for forming one or more fused layers (206) on a core (102), the method comprising:
- depositing one or more layers (108) of a specific material on one or more specific sections of the core (102) using a thermal spraying arrangement (110);and
- fusing the one or more layers (108) to form the one or more fused layers (206) on the one or more specific sections of the core (102) using a laser beam arrangement (202).

2. The method according to claim 1, wherein depositing the one or more layers (108) further comprises a step of rotating the core (102) around its axis.

3. The method according to claim 1, wherein fusing the one or more layers (108) further comprises a step of rotating the core (102) around its axis.

4. The method according to claim 1, wherein fusing the one or more layers (108) further comprises a step of scanning the one or more layers (108) by a focused laser beam (204) of the laser beam arrangement (202).

5. The method according to claim 1 further comprises a step of placing the one or more specific sections of the core (102) under the laser beam arrangement (202) before fusing the one or more layers (108).

6. A system for forming one or more fused layers (206) on a core (102), the system comprising:
- a thermal spraying arrangement (110) for depositing one or more layers (108) of a specific material on one or more specific sections of the core (102); and
- a laser beam arrangement (202) for generating a focused laser beam (204) for fusing the one or more layers (108) to form the one or more fused layers (206) on the one or more specific sections of the core (102).

7. The system according to claim 6 further comprising a movement controller (104) for rotating and shifting the core (102).

8. The system according to claim 7 further comprising a connection arrangement (106) for connecting the movement controller (104) with the core (102).

9. The system according claim 1, wherein the laser beam arrangement (202) further comprises a scanning arrangement for directing the focused laser beam (204) such that a scanning of the one or more layers (108) is achieved.
